# EUROPÄISCHE PATENTSCHRIFT

(11) **EP 0 753 157 B1**
(45) Veröffentlichungstag und Bekanntmachung des Hinweises auf die Patenterteilung: **13.10.1999**
(21) Anmeldenummer: 95914278.7
(22) Anmeldetag: 30.03.1995
(51) Int. Cl.: G01P 15/135

(54) **MIKROMECHANISCHE SENSOREINHEIT ZUM ERKENNEN VON BESCHLEUNIGUNGEN**
MICROMECHANICAL SENSOR UNIT FOR DETECTING ACCELERATION
DETECTEUR MICROMECANIQUE POUR LA DETECTION D'ACCELERATIONS

(30) Priorität: 30.03.1994 DE 4411130
(43) Veröffentlichungstag der Anmeldung: 15.01.1997
(73) Patentinhaber: SIEMENS AKTIENGESELLSCHAFT, 80333 München (DE)
(72) Erfinder: MADER, Gerhard, D-93107 Thalmassing (DE); NOETZEL, Jens, D-28359 Bremem (DE); SCHULZE, Steffen, D-28865 Lilienthal (DE)
(86) Internationale Anmeldenummer: DE9500429
(87) Internationale Veröffentlichungsnummer: WO9527216

(56) Entgegenhaltungen:
- EP-A- 0 567 938
- DE-C- 266 841
- US-A- 3 889 232
- US-A- 4 855 544
- US-A- 5 103 667

## Beschreibung

Die Erfindung betrifft eine mikromechanische Sensoreinheit zum Erkennen von Beschleunigungen, mit mindestens zwei Pendel mit einer an einer Biegefeder angeordneten seismischen Masse, und mit einem Positionsfühler je Pendel. Jedes Pendel und sein Positionsfühler wirken als Schalter zusammen, wobei jeder Schalter eine Ansprechschwelle aufweist, die durch seine bauteilspezifischen Eigenschaften festgelegt ist. Jeder Schalter liefert ein Fühlersignal, sobald unter Einwirkung einer ausreichend großen Beschleunigungskraft das Pendel den Positionsfühler erreicht oder berührt. Mindestens zwei Schalter sind für eine Beschleunigungsrichtung empfindlich. Steigt die auf die Sensoreinheit wirkende Beschleunigungskraft an, steigt auch die Anzahl der für diese Beschleunigungsrichtung empfindlichen Schalter an, die ein Fühlersignal liefern. Mit einer solchen Sensoreinheit können insbesondere Insassenschutzsysteme von Kfz, z. B. Airbags und Gurtstraffer, angesteuert werden.

Die US 4,855,544 zeigt eine Sensoreinheit mit mehreren mikromechanischen beschleunigungsabhängigen Schaltern, die auf einem in der horizontalen Ebene ausgerichteten Träger angeordnet und empfindlich für Beschleunigungen senkrecht zu dieser Ebene ausgebildet sind.

Die US 3,889,232 zeigt eine Steuereinrichtung für ein Insassenschutzmittel in einem Kraftfahrzeug mit zwei makromechanischen, in eigenen Gehäusen angeordneten Beschleunigungsschaltern, von denen ein Schalter als Safing-Sensor dient.

Bei einer Sensoreinheit (EP-A1 0 567 938) ist jeder Schalter auf einem in der horizontalen Ebene ausgerichteten Träger angeordnet und empfindlich für Beschleunigungen senkrecht zur Längsachse seiner Biegefeder. Bei einer ausreichend großen Beschleunigungskraft in z-Richtung wird das Pendel hin zum Träger bewegt, berührt dort eine unter dem Pendel angeordnete Elektrode und erzeugt ein Fühlersignal. Jedes Fühlersignal wird in einer Speicherzelle abgespeichert. Eine Auswerteeinheit liest mit einer vorgegebenen Frequenz die Speicherzellen aus, wertet ihren Inhalt aus und steuert daraufhin gegebenenfalls Insassenschutzsysteme von Kraftfahrzeugen an.

Bei einer solchen Steuereinrichtung kann ein Ausfall oder eine Fehlfunktion der Auswerteeinheit Fehlauslösungen von Insassenschutzsystemen hervorrufen.

Aufgabe der Erfindung ist es, den Nachteil der bekannten Vorrichtung zu vermeiden und insbesondere die Sensoreinheit klein, gewichtsarm und leicht herstellbar zu machen.

Die Aufgabe wird erfindungsgemäß durch die Merkmale des Patentanspruchs 1 gelöst.

Die erfindungsgemäße Sensoreinheit weist mindestens ein Pendel und mindestens zwei Positionsfühler auf. Dabei können mehrere Positionsfühler zu einer Seite des Pendels oder je ein Positionsfühler zu einer Seite von mindestens zwei Pendel angeordnet werden. Das Pendel und je ein zugehöriger Positionsfühler wirken als Schalter mit einer definierten Ansprechschwelle zusammen. Mindestens einer der mikromechanischen Schalter wird als Safingsensor verwendet. Sein Fühlersignal wird gesondert von den Fühlersignalen der anderen Schalter ausgewertet. Liefert der Safingsensor kein Fühlersignal, wird auch bei einem an eine Zündschaltung für das Insassenschutzsystem gerichtetes Zündsignal, das aufgrund der Auswertung der anderen Fühlersignale erzeugt wird und an eine Zündschaltung für das Insassenschutzsystem gerichtet ist, das Insassenschutzsystem nicht ausgelöst. Der integrierte Safingsensor hat eine niedrige Ansprechschwelle und wird zusammen mit den anderen Schaltern in denselben Vefahrensschritten nach den Methoden der Großintegration hergestellt.

Vorteilhafte Ausgestaltungen der Erfindung sind in den Unteransprüchen gekennzeichnet.

Die Erfindung und ihre Weiterbildungen werden anhand der Figuren erläutert. Es zeigen Figur
1 eine Steuereinrichtung zur Auslösung von Kfz-Insassenschutzsystemen,
2 eine Sensoreinheit in Draufsicht.

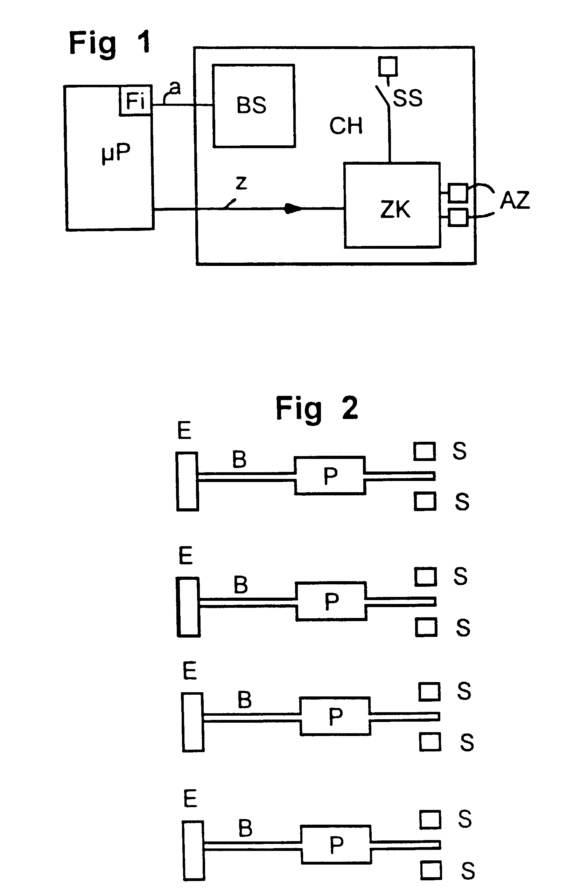

Die erfindungsgemäße Sensoreinheit enthält mindestens ein in mikromechanischer Technik hergestelltes Pendel. Jedes Pendel weist eine seismische Masse P und eine Biegefeder B auf (Figur 2). Die seismische Masse P ist über die Biegefeder B in solcher Weise schwingfähig an der Halterung E befestigt, daß die seismische Masse P zumindest quer zur Längsrichtung der Biegefeder B ausschlagen kann und damit empfindlich für Beschleunigungen in diesen Richtungen ist. Das Pendel kann auch eine seismische Masse P enthalten, die alleine durch die eigene träge Masse der Biegefeder B gebildet wird. Die Halterung E ist an einem Gehäuseteil, einem Rahmen oder auf einem sonstigen Träger CH (Figur 1) befestigt.

Neben jedem Pendel ist mindestens ein Positionsfühler S angeordnet. Die Positionsfühler S in Figur 2 sind elektrisch leitende Anschläge. Erreicht oder berührt das Pendel einen der Positionsfühler S, wird ein elektrisches Fühlersignal in Form eines Stromflusses erzeugt. Das Fühlersignal weist die quasi-binäre Zustände EIN und AUS auf. Je ein Positionsfühler S und das zugehörige Pendel wirken als Schalter zusammen. Die Sensoreinheit weist mindestens zwei Schalter auf, die für eine Beschleunigungsrichtung empfindlich sind.

Die Ansprechschwelle eines Schalters hängt von seinen geometrischen und bauteilspezifischen Eigenschaften ab, z.B. von der Anordnung der seismischen Masse P längs der Biegefeder B, dem Abstand zwischen dem in seiner Ruhelage befindlichen Pendel und dem Positionsfühler S (Figur 2), der Rückstellkraft der Biegefeder B und damit ihrer Form und Dimensionierung, und von der Größe der seismischen Masse P. Die Ansprechschwellen der verschiedenen, für dieselbe Beschleunigungsrichtung empfindlichen Schalter sind unterschiedlich. Ist die Sensoreinheit schwachen Beschleunigungen ausgesetzt, liefern nur wenige Schalter ihre Fühlersignale, bei starken Beschleunigung entsprechend mehr Schalter. Bei zunehmender und bei abnehmender Beschleunigung in dieser Beschleunigungsrichtung erzeugen nacheinander verschiedene Schalter ihre Fühlersignale.

Eine Steuereinrichtung zur Auslösung von Kfz-Airbags (Figur 1) enthält die Sensoreinheit BS mit einem Safingsensor SS sowie durch Zündbefehle z steuerbare, eine eigene Entscheidungslogik enthaltende Zündschaltung ZK, die ihrerseits an ihren Anschlüssen AZ Zündströme zur endgültigen Auslösung von Kfz-Airbags liefert, auf einem ASIC-Halbleiterchip als Träger CH. Werden die Sensoreinheit, eine deren Fühlersignale auswertende Auswerteschaltung µP und evtl. weitere Schaltungsteile gemeinsam auf einem Halbleiterchip in hybrider oder in integrierter Weise angebracht, verringert sich Volumen, Gewicht und Herstellungsaufwand der Sensoreinheit. Die Zündschaltung ZK kann konstruktiv auch zusammen mit der Auswerteschaltung µP, z.B. einem Mikroprozessor, eine gemeinsame integrierte Einheit auf einem ASIC-Chip bilden.

Erfindungsgemäß ist mindestens einer der vorgenannten Schalter als Safingsensor SS ausgebildet. Der Safingsensor SS hat die Aufgabe, getrennt von den Fühlersignalen der anderen Schalter, die Auslösung von Insassenschutzsystemen im Kfz zu kontrollieren, um die Zuverlässigkeit der Ansteuerung des Insassenschutzsystemes zu erhöhen. Der Safingsensor SS ist so dimensioniert, daß er kurze Zeit nach Auftreten einer Beschleunigungskraft, z.B. bei einem Unfall, ein Fühlersignal erzeugt. Dazu weist er eine große seismische Masse und eine niedrige Eigenfrequenz. Nur wenn neben dem Zündsignal z auch der Safingsensor SS ein Fühlersignal an die Zündschaltung ZK liefert, wird die Sicherheitseinrichtung ausgelöst.

Der Safingsensor SS erzeugt aufgrund seiner niedrigen Ansprechschwelle sein Fühlersignal i.a. vor den Fühlersignalen der anderen Schaltereinheiten. Damit wird durch sein Fühlersignal ein Zeitfenster definiers, wobei nur innerhalb dieses Zeitfensters die Insassenschutzeinrichtung ausgelöst werden kann.

Die Auswerteschaltung µP entscheidet anhand der Fühlersignale der anderen Schalter, ob ein Zündbefehl z an die Zünschaltung ZK geliefert wird. Dazu werden die Fühlersignale der anderen Schalter entweder direkt an die Auswerteschaltung µP geliefert, z.B. an Digitaleingänge eines Mikroprozessors, oder mittels eines Widerstandsnetzwerkes zu einem quai-analogen Beschleunigungssignal a überlagert und in dieser Form der Auswerteschaltung µP zugeführt. Fehlerhafte Zündbefehle, die z.B. durch Defekte des Mikroprozessors oder durch Schlaglöcher auf den Straßen erzeugt werden, bewirken wegen des Safingsensors nicht mehr das Auslösen des Insassenschutzsystems.

Wird der Safingsensor SS durch mehrere der Schalter gebildet, können deren Fühlersignale mittels eines Widerstandsnetzwerkes auch zu einem quasi-analogen Safingsensorsignal überlagert werden. Der Safingsensor SS wird zusammen mit den anderen Schaltereinheiten BS mikromechanisch in denselben Verfahrensschritten auf dem gemeinsamen Träger CH, z.B. einem ASIC-Halbleiterbaustein, hergestellt.

Jeder Schalter, also auch der Safingsensor kann ein neben dem Pendel angeordnetes Testelement aufweisen, das zum Erzeugen eines Ausschlages des Pendels zu Testzwecken dient und damit das Testen der Sensoreinheit/des Safingsensors im bereits in das Kfz eingebauten Zustand ermöglicht. Das Testelement bildet mit dem Pendel eine Kapazität, wobei durch Anlegen einer Spannung an das Testelement elektrostatische Kräfte auf das Pendel so stark einwirken, daß das Pendel mit mindestens einem seiner Positionsfühler S ein Fühlersignal erzeugt.

## Patentansprüche

1. Steuereinrichtung zum Auslösen einer Sicherheitseinrichtung in einem Kraftfahrzeug,
- mit einem Fühlersignale (a) liefernden Beschleunigungssensor (BS),
- mit einer die Fühlersignale (a) auswertenden Auswerteschaltung (µP), die ein Zündsignal (z) an eine Zündschaltung (ZK) liefert,
- und mit einem ein weiteres Fühlersignal liefernden Safing-Sensor (SS) zum Erkennen einer Beschleunigung,
- wobei die Sicherheitseinrichtung durch die Zündschaltung (ZK) ausgelöst wird, wenn gleichzeitig das Zündsignal (z) und das weitere Fühlersignal an der Zündschaltung (ZK) anliegen,
**dadurch gekennzeichnet,**
- daß der Beschleunigungssensor (BS) mikromechanisch ausgebildet ist und aufweist: mindestens ein Pendel (P/B) mit einer Biegefeder (B) und einer seismischen Masse (P), eine Halterung (E) für jedes Pendel (P/B), und mindestens zwei Positionsfühler (S), wobei jeder Positionsfühler (S) und ein zugehöriges Pendel (P/B) einen Schalter mit einem definierten Auslöseschwellwert bilden und mindestens zwei Schalter auf dieselbe Beschleunigungsrichtung ansprechen,
- daß der Safing-Sensor (SS) mikromechanisch ausgebildet ist und aufweist: ein Pendel (P/B) mit einer Biegefeder (B) und einer seismischen Masse (P), eine Halterung (E) für das Pendel (P/B), und einen Positionsfühler (S), wobei der Positionsfühler (S) und das zugehörige Pendel (P/B) eine Schalter mit einem definierten Auslöseschwellwert bilden,
- und daß Beschleunigungssensor (BS) und Safing-Sensor (SS) auf einem gemeinsamen Träger (CH) angeordnet und in den selben Verfahrensschritten hergestellt sind.

2. Steuereinrichtung nach Anspruch 1, dadurch gekennzeichnet, daß der Träger (CH) als Halbleiterchip ausgebildet ist.

3. Steuereinrichtung nach Anspruch 2, dadurch gekennzeichnet, daß die Zündschaltung (ZK) auf dem Halbleiteichip (CH) angeordnet ist.

4. Steuereinrichtung nach Anspruch 3, dadurch gekennzeichnet, daß die Auswerteschaltung (µP) auf dem Halbleiterchip (CH) angeordnet ist.

## Claims

1. A control device for triggering a safety device in a motor vehicle,
- having an acceleration sensor (BS) which supplies sensor signals (a),
- having an evaluation circuit (µP) which evaluates the sensor signals (a) and supplies an ignition signal (z) to an ignition circuit (ZK),
- and having a safing sensor (SS) which supplies a further sensor signal for the detection of an acceleration
- the safety device being triggered by the ignition circuit (ZK) if the ignition signal (z) and the further sensor signal are present at the ignition circuit (ZK) simultaneously,
**characterised in that**
- the acceleration sensor (BS) is of micromechanical construction and has: at least one pendulum (P/B) with a spiral spring (B) and a seismic mass (P), a holder (E) for each pendulum (P/B), and at least two position sensors (S), each position sensor (S) and an associated pendulum (P/B) forming a switch with a defined triggering threshold, and at least two switches responding to the same direction of acceleration,
- the safing sensor (SS) is of micromechanical construction and has: a pendulum (P/B) with a spiral spring (B) and a seismic mass (P), a holder (E) for the pendulum (P/B), and a position sensor (S), the position sensor (S) and the associated pendulum (P/B) forming a switch with a defined triggering threshold,
- and acceleration sensor (BS) and safing sensor (SS) are arranged on a common carrier (CH) and are manufactured using the same process steps.

2. A control device according to Claim 1, characterised in that the carrier (CH) is a semiconductor chip.

3. A control device according to Claim 2, characterised in that the ignition circuit (ZK) is arranged on the semiconductor chip (CH).

4. A control device according to Claim 3, characterised in that the evaluation circuit (µP) is arranged on the semiconductor chip (CH).

## Revendications

1. Dispositif de commande pour déclencher un dispositif de sécurité dans un véhicule automobile comportant :
- un détecteur d'accélération (BS) fournissant un signal de détection (a),
- un circuit d'interprétation (µP) qui exploite le signal de détection (a) et qui fournit un signal d'allumage (z) à un circuit d'allumage (ZK),
- et un détecteur de sécurité (SS) délivrant un autre signal de détecteur pour reconnaître une accélération,
- le dispositif de sécurité étant déclenché par le circuit d'allumage (ZK), si le signal d'allumage (z) et l'autre signal de détecteur sont appliqués simultanément au circuit d'allumage (ZK),
caractérisé
- en ce que le détecteur d'accélération (BS) est réalisé sous forme micromécanique et présente: au moins un pendule (P/B), composé d'un ressort de flexion (B) et d'une masse sismique (P), un support (E) pour chaque pendule (P/B) et au moins deux détecteurs de position (S), chaque détecteur de position (S) et un pendule (P/B) associé formant un interrupteur présentant une valeur de seuil de déclenchement définie, et aux moins deux interrupteurs réagissant à la même direction d'accélération,
- en ce que le détecteur de sécurité (SS) est réalisé sous forme micromécanique et présente un pendule (P/B) comportant un ressort de flexion (B) et une masse sismique (P), un support (E) pour le pendule (P/B) et un détecteur de position (S), le détecteur de position (S) et le pendule associé (P/B) formant un interrupteur comportant une valeur de seuil de déclenchement définie,
- et en ce que le détecteur d'accélération (BS) et le détecteur de sécurité (SS) sont installés sur un support commun (CH) et sont fabriqués au cours des mêmes étapes de procédé.

2. Dispositif de commande suivant la revendication 1, caractérisé en ce que le support (CH) est réalisé sous la forme d'une puce de semi-conducteurs.

3. Dispositif de commande suivant la revendication 2, caractérisé en ce que le circuit d'allumage (ZK) est disposé sur la puce de semi-conducteurs (CH).

4. Dispositif suivant la revendication 3, caractérisé en ce que le circuit d'interprétation (µP) est disposé sur la puce de semi-conducteurs (CH).
